Europäisches Patentamt

European Patent Office

Office européen des brevets

(11) Veröffentlichungsnummer: **0 487 834 A1**

## (12) EUROPÄISCHE PATENTANMELDUNG

(21) Anmeldenummer: **91114249.5**

(51) Int. Cl.5: **B01D 53/34**

(22) Anmeldetag: **23.08.91**

(30) Priorität: **30.08.90 DE 4027404**
**06.11.90 DE 4035205**
**01.11.90 DE 4034752**

(43) Veröffentlichungstag der Anmeldung:
**03.06.92 Patentblatt 92/23**

(84) Benannte Vertragsstaaten:
**BE DE FR SE**

(71) Anmelder: **Curtius, Fritz**
**Schachenerstrasse 72**
**W-8990 Lindau(DE)**

(72) Erfinder: **Curtius, Fritz**
**Schachenerstrasse 72**
**W-8990 Lindau(DE)**

(54) **Oxidierendes Waschverfahren zur Reinigung von Abgasen.**

(57) Die Erfindung betrifft ein oxidierendes Waschverfahren zur Reinigung von Abgasen z.B. von Rauchgasen, unter Verwendung von H2O2 und von Salpetersäure
und zur kontinuierlichen Überwachung der Abscheidefunktion der schwer meßbaren Schwermetalle und organischen Chlorverbindungen.

Hierzu wird die Abscheidung der weiteren Schadstoffe z.B. Schwermetalle- Hg(0) und Dioxine/Furane - PCDD/PCDF der Abscheidung des Hauptschadstoffes, nämlich der Stickoxide überlagert und
die Funktion der Schwermetall- und PCDD/PCDF-Reduktion durch die Reduktion der Stickoxide überwacht.

Fig. 1

Die Erfindung betrifft ein Waschverfahren, in dem unter oxidierenden Bedingungen bei Zugabe von Wasserstoffperoxid (H2O2) Abgase gereinigt werden. Es ist für die Reinigung von nitrosen Gasen geeignet und berücksichtigt gleichzeitig die Behandlung, teilweise in Spuren vorhandener Schadstoffe metallischer oder organischer Art, die bei einer Freisetzung mit den Abgasen aus heutiger Sicht die Umwelt stark belasten.

Bei diesen Schadstoffen handelt es sich um Schwermetalle z.B. Quecksilber (Hg) und um organische Chlorverbindungen, speziell Dioxine und Furane.

Ein bekannter Anwendungsfall für den Einsatz von Abgasreinigungen ist die Behandlung von Abgasen aus Müllverbrennungen. Als bewährte Technik kann man eine Rauchgaswäsche mit Wasser und alkalischen Sorptionsmitteln z.B. mit Natronlauge oder Kalkmilch zur Abscheidung von HCl, SO2 oder HF bezeichnen. Eventuell wird die Flugasche separat in einem Elektrofilter abgeschieden. Diese Technik ist seit Jahren installiert worden und wird noch immer gebaut.

Die oben erwähnten Schadstoffe wie Quecksilber und Dioxine/Furane wurden in den gebauten Anlagen durch die Temperaturabsenkung in der Wäsche mitbehandelt und teilweise kondensiert. Die heute gemessenen Immissionwerte und festgestellten Belastungen in der Umgebung von Müllverbrennungsanlagen zeigen aber, daß diese einfache, beiläufige Absenkung infolge Kühlkondensation für diese Schadstoffe nicht ausreichend ist.

Inzwischen wird dieser Situation in Deutschland durch die 17. Verordnung zum Bundesimmissionsschutz Gesetz (BImschV) Rechnung getragen. Diese 17. BImschV schreibt in § 5 als zulässige Emissionen im Reingas für

| Quecksilber | 0.05 mg/Nm3 | |
| Dioxine/Furane | 0.1 ng/Nm3 | vor. |

Eine bekannte Methode die obigen Schadstoffe aus den Rauchgasen der Müllverbrennung abzuscheiden, ist der zusätzliche Einbau eines Aktivkohle-Filter in den Rauchgasstrom. Diese Methode hat den Nachteil, daß

1. infolge von Inhomogenitäten im Verbrennungsprodukt und der daraus resultierenden Strähnenbildung im Rauchgasstrom, die Schadstoffe ungleichmäßig verteilt sind und deshalb auch ungleichmäßig abgeschieden werden;

2. die Schadstoffe sorptiv an die Aktivkohle gebunden sind und jederzeit bei erhöhter Temperatur durch Desorption als Schadstoffwolke freigesetzt werden können und die Umgebung dadurch viel stärker belasten;

3. weder die Absorption unter 1. noch die mögliche Desorption unter 2. bezüglich der PCDD/PCDF kontinuierlich gemessen und kontrolliert werden kann.

Eine solche Speicherung und Anreicherung dieser gefährlichen Substanzen stellt also für die umliegende Bevölkerung eine ständige Gefahr dar, da mögliche Emissionen aus den Aktivkohle-absorbern nicht kontinuierlich überwacht werden können.

Es ist die Aufgabe der Erfindung, diese kritischen und für die menschliche Gesundtheit gefährlichen Schadstoffgruppen wie Quecksilber und Dioxine/Furane in einer oxidierenden Behandlungsstufe mittels H2O2 und HNO3 gezielt aus den Rauchgasen abzuscheiden und diese Abscheidung kontinuierlich zu überwachen.

Es sind verschiedene Verfahren bekannt, die mittels einer Wäsche von Rauchgasen mit H2O2 und HNO3 den NOx-Gehalt in den Rauchgasen absenken und die obigen Schadstoffe erfassen. Eines dieser Verfahren ist, ein "Verfahren zum Entfernen von Stickoxiden aus Rauchgasen" unter PCT/DE88/00412.

Mit diesem Verfahren ist es möglich in nitrosen Gasen zunächst einen Teil des NO in NO2 umzusetzen und anschließend gezielt die Mischung von NO und NO2 mittels H2O2 auszuwaschen.

Das Verfahren hat aber den Nachteil der eingeführten Technik, daß nämlich die Schwermetalle und andere kondensierbare Stoffe nur zufällig, wie bei der bekannten Rauchgasreinigung, mitbehandelt werden.

Eine gezielte Integration der Behandlung dieser Stoffe ist nicht vorgesehen. Die Schwermetalle und Dioxine/Furane werden also weiterhin unkontrolliert in dem behandelten Reingas verbleiben.

Es hat sich als weiterer Nachteil des erwähnten Verfahrens zur Behandlung von NOx haltigen Abgasen herausgestellt, daß bei Rauchgasen aus Müllverbrennungen der NO2 Gehalt im Gas sehr niedrig ist und deshalb die Oxidation nach der Gleichung

$$NO + 2\ HNO3 \longrightarrow 3\ NO2 + H2O \qquad (1)$$

2

sehr langsam abläuft.

Es ist deshalb die weitere Aufgabe der Erfindung, das bekannte Verfahren zur NOx-Abscheidung so zu verbessern, daß die Bildung von NO2 in den nitrosen Gasen wirkungsvoller durchgeführt wird, damit in dem verbesserten Gesamtverfahren die eigentliche Aufgabe nämlich die Abscheidung von Schwermetallen und organischen Chlorverbindungen integriert werden kann.

Diese Aufgabe wird erfindungsgemäß dadurch gelöst, daß

- in einer 1. Stufe mittels einer Wäsche im Gegenstrom mit Salpetersäure (HNO3) und salpetriger Säure (HNO2) nach der Gleichung

$$HNO2 + HNO3 \longrightarrow 2\ NO2 + H2O\ ; \qquad (2)$$

NO2 erzeugt wird,

- und in den folgenden Stufen des verbesserten Gesamtprozess der Absoprtion der nitrosen Gase als Hauptschadstoff, die Abscheidung der wesentlich gefährlicheren Schadstoffe nämlich Schwermetalle und organische Chlorverbindungen (PCDD/PCDF) überlagert wird. Wobei die in kleinen Konzentrationen vorhandenen gefährlichen Schadstoffe mit der vorhandenen wäßrigen und stark oxidierenden Lösung aus HNO3 und H2O2 ausgewaschen werden.

Die Bildung von NO2 nach der obigen Gleichung (2) wird in der deutschen Anmeldung dem "Verfahren zur Oxidation von nitrosen Gasen(NO) in einem Gasstrom, durch eine Wäsche des Gasstromes mit Salpetersäure" unter P 40 27 404.7 beschrieben.

Demgegenüber ist die gemeinsame Behandlung mehrerer Schadstoffe in der deutschen Anmeldung als "Verfahren zur Reinigung von Abgasen in einem oxidierenden Waschverfahren mit H2O2" unter P 40 35 205.6 beschrieben.

Eine weitere deutsche Zusatzanmeldung nämlich eine "Vorrichtung zur gleichzeitigen Behandlung von mehreren Schadstoffen" unter P 40 34 752.4 beschreibt einen Teil der vorliegenden Erfindung.

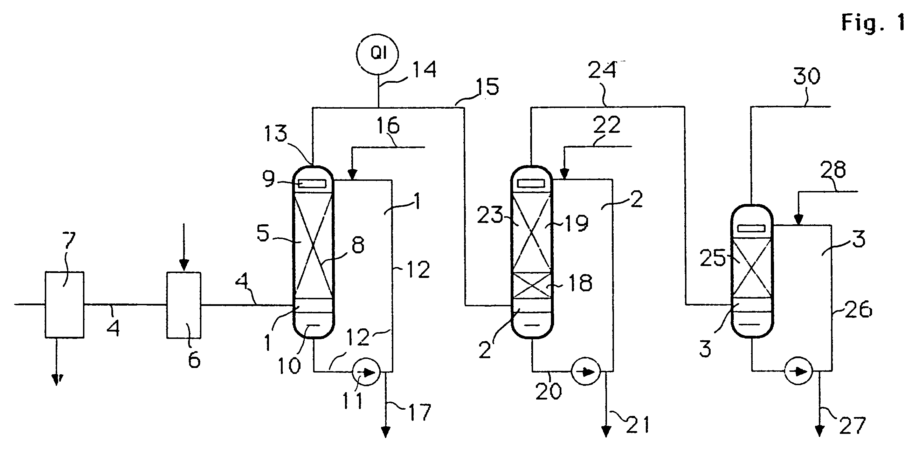

Im folgenden wird zunächst die verbesserte Oxidation von NO entsprechend der Gleichung (2) beschrieben. Diese Oxidation findet in der Waschstufe 1 statt, der ersten der 3 in Fig. 1 dargestellten Waschstufen.

Neben den Reaktionen nach Gleichung (1) und (2) ist bei Vorhandensein von Wasserdampf die weitere Reaktion bekannt:

$$NO + NO2 + H2O \longrightarrow 2\ HNO2\ ; \qquad (3)$$

Die Gleichnung (1), die unter den chemischen Bedingungen der vorgegebenen Abgaszusammensetzung als langsam bezeichnet werden kann, ist die Summe von Gleichung (2) und (3).

Demgegenüber beschreibt die Gleichung (2) den Absorptionsvorgang bei der Herstellung von Salpetersäure und verläuft dann von rechts nach links. In der Literatur ( Ullmann Bd. 15, S. 24, 1964) ist beschrieben, daß die NO2 Konzentration im Gasraum die Geschwindigkeit der Reaktion bestimmt.

Ist in dem Gasstrom nur wenig NO2 vorhanden und überwiegt in Gleichung (2) die linke Seite, so bestimmen HNO2 und HNO3 die Geschwindigkeit der Reaktion und es bilden sich aus HNO2 und HNO3 nach Gleichung (2) Stickstoffdioxid und Wasserdampf. Da wegen der verschärften und steigenden Emissionsbegrenzungen der NOx Gehalt in den Abgasströmen schon vergleichsweise niedrig ist und auf tiefere Werte abzusenken ist, gelten für diese Abgase die Reaktionsbedingungen der Gleichung (2).

Erfindungsgemäß wird deshalb nach Anspruch 7 der vorliegenden Erfindung der NO enthaltende Gasstrom zur Oxidation des NO in einem Wäscher mit einer Waschflüssigkeit behandelt, die HNO2 und HNO3 enthält, und der Beginn der Oxidation mit einer Reaktion nach Gleichung (2) eingeleitet, um den Vorgang der NO2-Bildung zu beschleunigen.

Die Gleichung (3) beschreibt das Gleichgewicht zwischen NO, NO2 und HNO2 bzw. die Bildung von HNO2 aus NO und NO2. Wobei die HNO2 in der Dampfphase mit einem in der Flüssigkeit gelösten Anteil im Gleichgewicht steht. Diese Reaktion kann aber erst einsetzen, wenn in dem Abgasstrom NO2 vorhanden ist.

Der zu behandelnde Gasstrom strömt in der Waschstufe 1 von unten nach oben gegen die herabfließende Waschflüssigkeit. Hierbei treten gasseitig die folgenden Reaktionen und Stoffaustauschvorgänge auf:
Beim Gaseintritt desorbiert HNO2 und HNO3 in das NO2 arme Gas und die NO2 Bildung setzt ein entsprechend der Gleichung (2). Bei der NO2 - Zunahme im aufsteigenden Gasstrom bildet sich vermehrt HNO2 in der Dampfphase und in der herabfließenden Flüssigkeit entsprechend Gleichung (3), sodaß HNO2 in der Flüssigkeit ständig ergänzt wird. Die Waschflüssigkeit in der Stufe 1 wird im Kreis geführt. Wegen der Desoprtion von HNO2 am Gaseintritt ist die aufgegebene Flüssigkeit arm an HNO2. Deshalb wird am Kopf der Waschstufe 1 bei dem Gasaustritt und der Flüssigkeitsaufgabe zunächst HNO2 aus dem Gasstrom entsprechend der Gleichung (3) zurückgewonnen und die Reaktion entsprechend Gleichung (2) aufrechterhalten.

Die Salpetersäure (HNO3) als 2 ter Reaktionspartner wird in der 2 ten Stufe, der Oxidation mittels H2O2 erzeugt. Diese Stufe wird weiter unten beschrieben.

Die Geschwindigkeit der NO2-Bildung hängt von dem Dampfdruck und damit von der Konzentration der HNO3 ab und von dem Gehalt an HNO2 in der Waschflüssigkeit.

Die Konzentration von HNO2 steigt dabei an, wenn die Flüssigkeitsmenge reduziert wird. Es kann sich nämlich bei der Flüssigkeitsaufgabe bei kleinerer Menge im Austausch mit dem Gas in der Flüssigkeit eine höhere HNO2-Konzentration einstellen.

Die Konzentration der HNO3 in der Waschflüssigkeit liegt im allgemeinen zwischen 15 % und 45 %. Über die Zufuhr von Wärme in die Stufe 1 z.B. über den Wärmetauscher 6 kann die HNO3-konzentration infolge der auftretenden Wasserverdampfung erhöht werden.

Versuche mit Rauchgasen einer Müllverbrennung haben gezeigt, daß erfindungsgemäß 95 % des NO in NO2 umgewandelt werden kann. Die folgenden NOx Werte wurden bei der Oxidation von NO gemessen:

Gaseintritt:    NO 300 mg/Nm3
Gasaustritt    NO 30 mg/Nm3
                NO2 810 mg/Nm3

Während HNO2 am Gaseintritt aus der Flüssigkeit desorbiert, da im eintretenden Gasstrom wenig NO2 vorhanden ist, und am Gasaustritt HNO2 in der Flüssigkeit absorbiert wird, so ist die Waschstufe 1 bezüglich der Waschflüssigkeit so zu betreiben, daß

1. die Flüssigkeitsmenge so klein gewählt wird, daß beim Austritt der Flüssigkeit aus dem Reaktor nach Fig. 2 die Flüssigkeit mit dem eintretenden Gasstrom hinsichtlich der Partialdrücke der Komponenten im Gleichgewicht steht und der HNO2 Gehalt in der Flüssigkeit gegen Null geht,

2. die Flüssigkeitsmenge, die in den Reaktor am Gasaustritt nach Fig. 2 aufgegeben wird, gerade so groß ist, daß der HNO2 Gehalt in der Flüssigkit möglichst hoch wird und möglichst viel, der für den Verfahrensablauf wichtigen Komponente HNO2, aus dem Gas zurückgewonnen wird;

3. die Flüssigkeit, wenn sie außerhalb des Reaktors ist, möglichst HNO2-frei ist und wenn sie innerhalb des Reaktor ist, als Puffer für HNO2 dient, um die Reaktionen nach den Gleichungen (2) und (3) durchzuführen;

4. als Reaktor eine Ausführung mit Einbauten gewählt wird, welche den Betrieb mit kleinen, variablen Flüssigkeitsmengen und die Ausbildung von mehreren Trennstufen zur Durchführung der Stoffaustauschvorgänge, wie hier unter 1. - 3. geschildert, gewährleistet.

Diese Hinweise für den Betrieb der Stufe 1 gelten für Abgasströme, die insgesamt wenig NOx enthalten.

Das erfindungsgemäße Verfahren zur Reinigung von nitrosen Gasen arbeitet in der oxidierenden Stufe, im folgenden als Stufe 2 bezeichnet, hauptsächlich nach der Gleichung

NO + NO2 + 2 H2O2 --> 2 HNO3 + H2O;     (4)

Die nitrosen Gase aus der Stufe 1, mit einem hohen Anteil an NO2, werden in der Stufe 2 nach Gleichung (4) mittels H2O2 zu HNO3 umgewandelt. Dies gilt für Abgase die relativ hohe NOx-Konzentrationen aufweisen, z.B. ein Abgas aus Beizbädern oder einer Salpetersäureherstellung. Neben dieser Gleichung sind noch 2 weitere Gleichungen zur Oxidation möglich:

2 NO2 + H2O2 --> 2 HNO3 ;     (5)

3 NO2 + H2O --> 2 HNO3 + NO :     (6)

Gleichung 5 zeigt, daß sobald NO2 gegenüber NO im Überschuß vorhanden ist, es nach Gleichung 5 abgeschieden werden kann. Die Abscheidung nach Gleichung (5) ist vorallem für die Gasströme, die relativ wenig NOx enthalten und heute auf tiefe Restkonzentrationen zu reinigen sind, z.B. die Rauchgase aus Anlagen zur MÜllverbrennung vorteilhaft.

Gleichung 6 zeigt, daß NO2, wenn kein H2O2 vorhanden ist, teilweise zu NO zurückreagiert.

Inzwischen hat z.B. die Schweiz die zulässigen Höchstwerte im Reingas in der neuen LRV (Luftreinhalteverordnung) auf ca. 70 mg/Nm3 gesenkt. Es hat sich bei Versuchen gezeigt, daß die Absorption von NOx aus Rauchgasen der Müllverbrenung gemäß Gleichung (5) d.h. über NO2 für das Erreichen so tiefer Reingaswerte vorteilhaft ist. Entsprechend ist es in diesem Fall auch vorteilhaft die Bildung von NO2 aus NO in der Stufe I bis auf 70 bis 90 % durchzuführen. D.h. in diesem Fall wird das NO weitgend in NO2 umgewandelt.

Die rasche und verbesserte Oxidation von NO in der Stufe 1 entsprechend der Gleichung (2) kann also in bezug auf die Absorption durch den Abscheidemechanismus nach Gleichung (5) eine bessere Reinigung der Abgase bezüglich NOx bewirken.

Gemäß dem Gedanken der Erfindung sollen mit dem oxidierenden Verfahren nach den Gleichungen (4) und (5) gleichzeitig auch die anderen Schadstoffe oxidiert werden können. Unabhängig vom Gehalt an NOx muß hierzu freies H2O2 neben der HNO3 als oxidierender Partner dampfförmig über und in der Flüssigkeit vorhanden sein. Dies wird dadurch erreicht, daß die Stufe 2 im Gegenstrom betrieben wird und H2O2 überstöchiometrisch dieser Stufe zugeführt wird. Ist die Austauschfläche oder die Reaktionsfläche, die durch Einbauten gebildet wird, in der Stufe 2 größer als für die Einbindung der nitrosen Gase nach den Gleichungen (4) und (5) erforderlich ist, so läuft die Oxidationsreaktion in den Einbauten des Wäschers 23 an der Eintrittsseite des Gases in der Packung 18 nach Fig. 1 ab und über der restlichen Packung 19 strömen, die von NOx befreiten Gase, gegen eine oxidierende Waschflüssigkeit mit hohen Gehalten an H2O2. Bei diesen Bedingungen können in dieser Fläche dann die weiteren Schadstoffe oxidierend behandelt werden.

Die erzeugte Salpetersäure hat im allgemeinen eine Konzentration zwischen 1 und 45 %. Bei hohen Temperaturen und hohen Konzentrationen der Säure steigt der Dampfruck ebenfalls, sodaß auch die Säurekonzentration im Reingas ansteigt und eine Nachbehandlung des Reingases zur Auswaschung der Säurereste erforderlich wird. Bei einer Temperstur in der Waschflüssigkeit der Stufe 2 von 40 ° C und einer Säuere mit 10 % HNO3 beträgt die HNO3 Restemission im Reingas ca. 11 mg/Nm3.

Quecksilber ist das Schwermetall, dessen Konzentration durch eine Anderung der 17. BImschV nachträglich auf 0.05 mg/Nm3 im Reingas abgesenkt wurde. Nach Prof. Vogg / Karlsruhe gehen 20 % der Rohgaskonzentration mit den gereinigten Rauchgasen heute noch als Hg(O), metallisches Quecksilber, bei Naßwäschen in den Kamin. Dies zeigt die Notwendigkeit, Quecksilber nicht nur durch eine Kühlung zu erfassen, sondern eine gezielte Reinigungsstufe für Quecksilber vorzusehen.

Andererseits gibt es eine, vorallem in der Schweiz anerkannte, Methode zur Bestimmung der Quecksilbergehalte in Abgasen. Hier wird in der Gasflasche mittels einer Lösung aus HNO3 und H2O2 das Quecksilber quantitativ ausgewaschen.

Diese Methode hat den verfahrensbedingten Nachteil, daß über der Waschflüssigkeit große Mengen an HNO3 dampfförmig mit dem Abgas freigesetzt werden. Damit ist ein Chemikalienbedarf und eine zusätzliche Abgasbelastung verbunden.

Es ist die Aufgabe der Erfindung, diese aus der Abgasanalytik bekannte Methode zur Hg(0) - Bestimmung großtechnisch in der Rauchgasreinigung zu realisieren.

Die Abscheidung erfolgt dabei über folgende Geichung:

$$Hg + H_2O_2 \longrightarrow HgO + H_2O ; \qquad (7)$$

Die chemischen Bedingungen zur Oxidation von Hg(O) sind beim Eintritt der Waschflüssigkeit in die Packung 19 der Stufe 2 erfüllt. Bei Installation von genügend Austauschfläche läßt sich Quecksilberabscheidung und die Abscheidung von NOx überlagern. Das HgO hat einen höheren Siedepunkt als Hg(O) und geht in der Waschflüssigkeit in Lösung. Durch Zugabe eines Komplexbildner wie TMT 15, der Fa. Degussa, läßt es sich bei der Entsorgung der Flüssigkeit stabilisieren.

Die notwendigen Abscheideraten der einzelnen Komponenten reichen

| für NOx von | 500 mg/Nm3 im Rohgas |
|---|---|
| auf | 70 mg/Nm3 im Reingas |
| für Hg(O) von | 0.5 mg/Nm3 im Rohgas |
| auf | 0.05 mg/Nm3 im Reingas. |

Für Abscheidung beider Schadstoffe ist also bei gleichen Abscheidegeschwindigkeiten ungefähr die gleiche Packungshöhe erforderlich. Da beide Reaktionen theoretisch nacheinander ablaufen, bedeutet das, daß bei der Behandlung von beiden Schadstoffen die Höhe der Einbauten bzw. die Fläche der Einbauten zu verdoppeln ist.

Während für die NOx-Einbindung ca 310 mg/Nm3 H2O2 bei stöchiometrischer Fahrweise benötigt würden, so verlagert die überstöchiometrische Dosierung von H2O2 mit ca. 400 mg/Nm3 die Reaktionszone an den Gaseintritt in die Austauschflächen 18 der Stufe 2. Für die Oxidation des Quecksilber nach (7) ist aber weniger als 1 mg/Nm3 H2O2 erforderlich. In dem oberen Teil der Einbauten kann also das Quecksilber mit dem 400 fachen Überschuß an H2O2 absorbiert werden.

Die großtechnische Hg(0)-Abscheidung zusammen mit der NOx-Abscheidung hat also den Vorteil, daß für die Behandlung des Quecksilber abgesehen von einem geringen Mehrbedarf an H2O2 kein zusätzlicher Bedarf an HNO3 erforderlich ist. Weiter ist der sonst notwendige apparative Aufwand für die Behandlung des dampfförmigen HNO3 in dem NOx - Abscheideprozeß bereits vorhanden.

Die Dioxine und Furane sind die 2te Gruppe dampfförmiger Schadstoffe aus Müllverbrennungsanlagen, die nach der 17. BImschV erheblich zu reduzieren sind und die bisher nur einer zufälligen Behandlung in den bekannten Waschverfahren unterzogen wurden.

Über Untersuchungen zur Kondensation und zur Oxidation dieser Schadstoffe mittels H2O2 als Oxidationsmittel wurde in Chem. Ing. Technol. 13 (1990) 221 - 229 von Vogg, Hunsinger und Stieglitz berichtet.

Es hat sich gezeigt, daß alleine durch eine Kühlung des Rauchgases diese organischen Verbindungen aus den Rauchgasen ausgewaschen bzw. kondensiert werden. Weiter werden bei einer Wäsche mit H2O2 die Dioxine/Furane oxidiert und dabei chemisch abgebaut.

Unter Berücksichtigung der jetzt gültigen Äquivalenzfaktoren bezüglich der Gesundtheitsgefährdung der einzelnen Dioxin/Furan Verbindungen und speziell der Tetraverbindungen ist die reine Kondensation nicht ausreichend.

Nach der obigen Untersuchung von Vogg, Hunsinger und Stieglitz kann Dioxin/Furan mit H2O2, bei einer Eindüsung von 80 mg/Nm3 in das zu behandelnde Abgas, oxidiert und abgebaut werden. Der stöchiometrische Chemikalienbedarf für die Dioxine/Furane liegt unter 1 $\mu$g/Nm3.

Das vorgeschlagene System der 3 Autoren, nämlich die Eindüsung von verdünnter H2O2 als Oxidationsmittel im Gleichstrom, hat einige verfahrensbedingte Nachteile, die gegen eine großtechnische Einführung des Verfahrens sprechen. Hierzu gehören:

1. starke Konzentrationsschwankungen im Rohgas durch Strähnenbildung,
2. keine gleichmäßige Verteilung des Oxidationsmittel,
3. langsame Reingasanalytik gegenüber schnellen Schwankungen des Schadstoffeintrages,
4. keine kontinuierliche Schadstoffmessungen.

Dieses Verfahren hat also die Nachteile, daß die Abscheidung der PCDD/PCDF durch ein Oxidation mit H2O2 zwar bei bestimmten Bedingungen stattfindet, das Einstellen dieser Bedingungen aber sehr empfindlich ist, und die Abscheidefunktion im praktischen Betrieb nicht überwacht werden kann, da keine kontinuierliche Messung für PCDD/PCDF verfügbar ist.

Es ist die weitere Aufgabe der Erfindung, diese Nachteile der Verfahrensführung zu vermeiden und die bekannten Oxidationsmechanismen für PCDD/PCDF in ein großtechnisches Verfahren zur Rauchgasreinigung umzusetzen.

In dem verbesserten Verfahren zur Abscheidung des Hauptschadstoffes NOx sind die chemischen Bedingungen und die Betriebsmittel zur Behandlung der PCDD/PCDF vorhanden. Im Vergleich zu den oben angegebenen Abscheideraten für NOx und Hg sind bei Dioxinen und Furanen folgende Abscheideraten notwendig:

| Rohgas von | 40 ng/Nm3 |
| Reingas auf | 0.1 ng/Nm3 |

Die notwendige Trennleistung und damit die installierte Austauschfläche zum Erreichen der tiefen Restkonzentrationen ist bei Dioxinen/Furanen ca. 3 mal so groß als für die anderen Schadstoffe NOx und Hg.

Bei der Behandlung aller 3 Stoffe in Stufe 2 des Verfahrens addieren sich die Höhen der Austauschfläche 18 für die NOx Abscheidung und der Fläche 19 für die Behandlung der Dioxine/Furane. Die Schwermetalle werden parallel zu den Dioxinen/Furanen behandelt.

Von außen betrachtet wird in dem erfindungsgemäßen Verfahren die PCDD/PCDF - abscheidung der Abscheidung des meßbaren Hauptschadstoffes überlagert und die Abscheidung des PCDD/PCDF kann über die kontinuierliche Messung der NOx-Abscheidung kontrolliert werden. Infolge der größeren Bauhöhe und der Installation von mehr Austauschfläche in der Stufe 2 kann auch eine verbesserte NOx Abscheidung erreicht werden. Dieser tiefere NOx Wert im Reingas ist der Sollwert für die richtige Betriebsführung des Verfahrens. Der Sollwert, der nur unter den chemischen/physikalischen Bedingungen der PCDD/PCDF - Abscheidung erreicht wird, gewährleistet die Abscheidung der PCDD/PCDF sowie der Schwermetalle und kann kontinuierlich aufgezeichnet werden. Die NOx-Abscheidung ist also eine Funktionsbestätigung für die anderen nicht meßbaren Schadstoffreduktionen.

Der stöchiometrische Verbrauch an Oxidationsmittel H2O2 für die geringen Konzentrationen an PCDD/PCDF ist gegenüber dem Bedarf für die NOx- Behandlung nicht meßbar.

Bei dieser Betriebsweise einer Anlage ist es also möglich, über die normale Aufzeichnung der NOx-Reduzierung auch eine Aussage über die PCDD/PCDF Oxidation zu machen.

Auch für diese Schadstoffgruppe ist die gemeinsame Abscheidung mit den nitrosen Gasen günstig. Beide können mit der gleichen Abscheidetechnik optimal behandelt werden und die Dioxine/Furane können, den für die anderen Reaktionen notwendigen Bedarf an Reaktionsmittel, bezogen auf die eigene Oxidation als fast $4 \times 10^5$-fachen stöchiometrischen Überschuß nutzen. Ein zusätzlicher Verbrauch ist aber nicht feststellbar.

Die Behandlung der Dioxine/Furane in einer geordneten Packung ist außerdem vorteilhaft, da am Reingasaustritt durch die Packungscharakteristik mögliche Konzentrationsunterschiede der Schadstoffe im Gas homogenisiert sind. Bei der Bildung der Dioxine/Furane in dem Abgasstrom und bei der Behandlung bzw Abscheidung derselben entstehen Konzentrationsunterschiede, die weit über den Reingaswerten liegen. Erfindungsgemäß muß das Reingas vor jeder Messung so tiefer Konzentrationen in einem Austauschkörper homogenisiert werden.

Im folgenden wird das Verfahren anhand von Fig. 1 beschrieben.

Ein Rohgasstrom wird über die Leitung 4 der Stufe 1 zugeführt. Der Gasstrom kann aus einer Anlage zur Gewinnung von Salpetersäure (HNO3) stammen oder er kommt aus einer vorgeschalteten, Sauren - Wäsche zur Behandlung von Rauchgasen und speziell von Rauchgasen aus Müllverbrennungen.

In der Leitung 4 ist eine später beschriebene Vorbehandlung 7 und eine Stufe 6 zur Vorwärmung des Gasstromes um 4 - 10 °C über den Wasserdampftaupunkt. Die notwendige Wärme zur Vorwärmung kann indirekt über einen Wärmetauscher oder direkt mit Heißluft dem Abgasstrom zugeführt werden.

In dem Wäscher 5 der Stufe 1 erfolgt die Bildung von NO2 durch die Behandlung des Gasstromes mit HNO3 und HNO2. Hierzu strömt der Gasstrom durch die Packung 8 gegen die Waschflüssigkeit, die über den Verteiler 9 aufgegeben wird. Die Flüssigkeit wird über den Sumpf 10 abgezogen und über die Rohrleitung 12 und die Förderpumpe 11 erneut in den Wäscher 5 gegeben. Die Packung 8 kann als geordnete Packung ausgeführt werden. Über die Einspeisestelle 16 wird verdünnte HNO3 zur Durchführung der Reaktion nach Gleichung (2) aufgegeben.

Die Säure wird durch die Wärmezufuhr in der Vorrichtung 6 kontinuierlich eingedampft.

Der Abzug der Abschlämmung aus der Stufe 1 erfolgt über die Leitung 17. Das behandelte Gas verläßt bei 13 die Stufe 1 und gelangt über die Leitung 15 in die Stufe 2. Bei 14 kann durch eine Probennahme der NOx-Gehalt des Abgases nach der Stufe 1 bestimmt werden.

Aufgrund der NOx Analyse kann über die Flüssigkeitsmenge in der Leitung 12 der NO2 Anteil im Gasstrom nach der Stufe 1 geregelt werden und über eine Steigerung der HNO3 Konzentration, indem über den Wärmetauscher 6 mehr Wärme übertragen wird.

Erfindungsgemäß muß zur Erzielung einer möglichst hohen Konzentration an HNO2 in der Flüssigkeit und zur Beschleunigung der Reaktion nach Gleichung (2) bei Gasen mit tiefen NOx Anteilen auch die Flüssigkeitsmenge klein gewählt werden. Hier ergeben sich Flüssigkeitsbelastungen von kleiner 0.5 ltr/Nm3. Bei größeren Flüssigkeitsmengen wird aufgrund der Massenbilanzen die Konzentration des rückführbaren HNO2 tiefer, sodaß insgesamt der Stoffumsatz nach Gleichung (2) abnimmt.

Der bei 14 gemessene NO2 Gehalt ist gleichzeitig der Istwert für die überstöchiometrische Dosierung von H2O2 in der Stufe 2, die nun beschrieben wird.

Die Stufe 2 ist apparativ mit der Stufe 1 vergleichbar. Die Packungsteile 18 und 19 sind entsprechend der vorliegenden Beschreibung 2-stufig gezeichnet. Der untere Teil 18 ist erfindungsgemäß der Platz für die Oxidation der nitrosen Gase und die darüber liegende Packung 19 für die Behandlung von Quecksilber und Dioxinen/Furanen. Die H2O2 - Eindüsung erfolgt über die Leitung 22 zusammen mit Wasser, gegebenenfalls mit verdünnter HNO3. Der Abzug der produzierten HNO3 erfolgt über die Leitung 21. Ein Teilstrom der poduzierten Säure wird über eine nicht gezeigte Leitung, der Leitung 16, der Stufe 1 zugeführt. Bezüglich der Flüssigkeitsmenge zeigt die Stufe 2 die gleiche Abhängigkeit wie die Stufe 1. Bei Reduzierung der Flüssigkeit in der Leitung 20 erhöht sich bei konstanter H2O2-Dosierung über die Leitung 22 die Konzentration von H2O2 in der Waschflüssigkeit. Gleichzeitig verlängert sich die Verweilzeit der Flüssigkeit in der Packung 18/19. Beides die längere Verweilzeit und die höhere Konzentration bewirken einen besseren Chemikalienumsatz.

Im Wäscher 23 erfolgt also die Oxidation von NOx nach den Gleichungen (4)/(5) sowie in dem Teil 19 der Packung hauptsachlich die Abscheidung von Quecksilber und Dioxinen/Furanen aus dem Gasstrom.

In dem gereinigten Abgas sind noch Restkonzentrationen von NOx und dampfförmige Salpetersäure HNO3 entsprechend dem Partialdruck der im Wäscher 23 erzeugten Säure. Diese Verunreinigungen an Salpetersäure werden in der Reingasleitung 24 einer weiteren Waschstufe 25 zur Abscheidung und zur Erzeugung von verdünnter Säure zugeführt.

Hier wird mittels bekannter Technik die Endreinigung der Gase durch eine Wäsche mit H2O vorgenommen. Der zugehörige Flüssigkeitskreislauf 26 hat eine Zufuhr 28 für Wasser, eventuell auch für H2O2 und einen Abzug 27 für die verdünnte Säure bzw. zum Abzug der Abschlämmung. Diese Abschlämmung kann ganz oder teilweise in die Leitung 22 als Waschflüssigkeit gegeben werden.

Das behandelte Reingas wird über die Leitung 30 abgeführt. In dieser Leitung kann der Reingaswert für den Haupschadstoff NOx genommen werden, der gemäß dem beschriebenen Verfahren der Kontrollwert für die Funktion der integrierten Abscheidung von Schwermetallen und PCDD/PCDF ist.

In der Zuführungsleitung 4 für das Rohgas ist eine Stufe 7 zur Vorbehandlung des Rohgases vorgesehen. Unter bestimmten Bedingungen kann es sinnvoll sein, das Rauchgas vor der oxidierenden Wäsche unter den Taupunkt zu kühlen. In diesem Fall arbeitet die Stufe 7 als Oberflächenkondensator oder als Waschkondensator. Solch ein "Verfahren zur Kondensation von Dämpfen aus technischen Prozessen" ist unter P 40 33 145.8 vom 18.10.90 bekannt. Hiermit kann das Gas um 20 - 30 °C unterkühlt werden. Der Betrieb des Verfahrens bei tieferen Temperaturen hat den Vorteil, daß in der Stufe 2 eine Säure mit höherer Konzentration anfällt oder bei einer um 30 °C reduzierten Betriebstemperatur der Dampfdruck bei konstanter Säurekonzentration um ca 90 % abnimmt.

D.h. mit der Kühlung in der Stufe 7 läßt sich der dampfförmige Austrag aus der Sufe 2 erheblich reduzieren. Weiter ist es möglich, diese Stufe 7 zur Unterkühlung der Gase zwischen Stufe 1 und Stufe 2 in die Leitung 15 einzubauen.

Mit dem beschriebenen Verfahren ist es möglich, Abgase die Stickoxide und andere oxidierbare Schadstoffe enthalten gemeinsam zu reinigen und spezielle die Abscheidefunktion für die PCDD/PCDF kontinuierlich zu überwachen.

Bei einem Anstieg des Umweltbewußtsein wird auch die Frage der Wiederverwertung der nitrathaltigen Flüssigkeietn aus diesem Verfahren an Bedeutung gewinnen.

Mit dem vorliegenden Verfahren sollen also auch verwertbare Abfallstoffe erzeugt werden.

Erfindungsgemäß kann die Abschlämmung der Stufe 3 vermieden werden, indem auch dieser Stufe H2O2 zugeführt wird und die erzeugte Waschflüssigkeit in die Stufe 2, die eigentliche Absorption, zurückgeführt wird. In diesem Fall erfolgt die Absorption in 2 Stufen. Wobei die jeweils nachgeschaltete Stufe mit einer tieferen Konzentration bezüglich HNO3 gefahren wird.

Die erzeugte HNO3 der ersten Stufe kann in der Industrie verwendet werden. Die ursprünglich vorhandenen PCDD/PCDF sind oxidiert und als Schadstoff in der Flüssigkeit nicht mehr vorhanden.

Die abgeschiedenen Schwermetalle sind als Metalloxide in der Flüssigkeit gebunden. Sollten diese eine Verwertung der Säure verhindern, so kann z.B. das Quecksilber Hg(0) in einer zusätzlichen Stufe ausgewaschen werden. Diese Stufe benötigt eine wäßrige Lösung aus HNO3 und H2O2, die aus der Stufe 2 eingespeist werden können. Zusätzlich kann H2O2 eingespeist werden, das zu einer verstärkten HNO3 Bildung und höheren Säurekonzentrationen führt. Diese Stufe kann zwischen der Stufe 1 und der Stufe 2 in die Abgasleitung eingebaut werden.

Die Abschlämmung dieser zusätzlichen Stufe und die Abschlämmung der eigentlichen Stufe 1 sind beide verunreinigt. Bei der Behandlung von Rauchgasen aus der Müllverbrennung ist dem oxidierenden Waschverfahren eine saure Wäsche der Rauchgase vorgeschaltet. Dort befindet sich immer eine Waschstufe mit einer schwermetallreichen Lösung, die umweltgerecht entsorgt wird. In diese Stufe können z.B. die 2 verunreinigten Abschlämmungen eingeführt werden.

In diesem Fall ist es mit dem Verfahren also möglich auch bei Vorhandensein von Schwermetallen eine saubere und verwertbare Salpetersäure zu erzeugen.

**Patentansprüche**

Oxidierendes Waschverfahren zur Reinigung von Abgasen von Stickoxiden (NOx), Schwermetallen und organischen Verbindungen,

z.B. eines Rauchgases von NOx, Hg(0) (metallischem Quecksilber) und PCDD/PCDF (Dioxine/Furane) durch eine Wäsche mit einer wäßrigen Lösung aus HNO3 und H202,

und zur kontinuierlichen Überwachung der Abscheidefunktion der schwer meßbaren Schwermetalle und organischen Verbindungen, dadurch gekennzeichnet, daß

- die Abscheidung der weiteren Schadstoffe wie Schwermetalle und Dioxinen/Furanen (PCDD/PCDF), die in geringer Konzentration vorhanden sind, in die Abscheidung des Hauptschadstoff, nämlich der Stickoxide, integriert und der NOx-Abscheidung überlagert wird

- und die Funktion der Schwermetall- und der PCDD/PCDF-Reduktion über die Reduktion der Stickoxide überwacht wird.

**2.** Verfahren nach Anspruch (1), dadurch gekennzeichnet, daß die weiteren Schadstoffe metallischen und organischen Ursprungs mit geringen Rohgaskonzentrationen in den verbesserten Behandlungsstufen für die Stickoxide behandelt werden.

**3.** Verfahren nach Anspruch (1 - 2), dadurch gekennzeichnet, daß die weiteren Schadstoffe metallischen und organischen Ursprungs bei den gleichen physikalischen Bedingungen und in den gleichen Abscheidestufen wie die Stickoxide behandelt werden.

**4.** Verfahren nach Anspruch (1 - 3), dadurch gekennzeichnet, daß die weiteren Schadstoffe den gleichen Abscheidemechanismen wie die Stickoxide unterliegen und die Abscheidewirkung bezüglich der weiteren Schadstoffe über die Reingaswerte für NOx gemessen werden kann.

**5.** Verfahren nach Anspruch (1 - 4), dadurch gekennzeichnet, daß die PCDD/PCDF durch die Oxidation als gesundheitsgefährlicher Schadstoff beseitigt werden.

**6.** Verfahren nach Anspruch (1 - 5), dadurch gekennzeichnet, daß die Schwermetalle in einer separaten Waschstufe zwischen der Stufe 1 und Stufe 2 mit einer wäßrigen Lösung aus $HNO_3$ und $H_2O_2$ oxidiert werden und die freiwerdende dampfförmige $HNO_3$ in der nachgeschalteten Stufe 2 zusammen mit den NOx abgeschieden wird.

**7.** Verfahren nach Anspruch (1 - 6), dadurch gekennzeichnet, daß die NOx-Abscheidung bezüglich der Oxidation von NO zu $NO_2$ in der Stufe 1 durch eine Wäsche mit Salpetersäure ($HNO_3$) und salpetriger Säure ($HNO_2$) nach der Gleichung

$$HNO_2 + HNO_3 \longrightarrow 2\,NO_2 + H_2O \qquad (2)$$

ausgeführt wird.

**8.** Verfahren nach Anspruch (1 - 7), dadurch gekennzeichnet, daß zur Kontrolle der $NO_2$- Bildung in der Stufe 1 die Menge der Waschflüssigkeit und die $HNO_3$-Konzentration derselben geregelt wird.

**9.** Verfahren nach Anspruch (1 - 8), dadurch gekennzeichnet, daß die Stufe 1 als Gegenstromwäscher mit einer geordneten Packung oder aus Kolonnenböden ausgeführt ist.

**10.** Verfahren nach Anspruch (1 - 9), dadurch gekennzeichnet, daß die, für die Reaktion notwendige, Salpetersäure über eine Eindampfung der Waschflüssigkeit in die Dampfphase gebracht wird.

**11.** Verfahren nach Anspruch (1 - 10), dadurch gekennzeichnet, daß die, für die Reaktion notendige, salpetrige Säure, ein Reaktionsprodukt der in der Stufe 1 erzeugten Mischung aus NO und $NO_2$ ist, das bei der Aufgabe der Flüssigkeit aus dem behandelten Gas in der Flüssigkeit absorbiert wird und mit der Flüssigkeit, in ständigem Austausch mit dem Gas, in die Stufe 1 zurückgebracht wird.

**12.** Verfahren nach Anspruch (1 - 11), dadurch gekennzeichnet, daß die Abschlämmung aus der Stufe 1 in eine vorgeschaltete Waschstufe zurückgeführt wird.

**13.** Verfahren nach Anspruch (1 - 12), dadurch gekennzeichnet, daß in der Stufe 2 die Salpetersäure für die $NO_2$-Bildung in der Stufe 1 erzeugt wird.

**14.** Verfahren nach Anspruch (1 - 13), dadurch gekennzeichnet, daß in der Stufe 2 die nitrosen Gase über die Gleichungen

$$NO + NO_2 + 2\,H_2O_2 \longrightarrow 2\,HNO_3 + H_2O \qquad (4)$$

$$2\,NO_2 + H_2O_2 \longrightarrow 2\,HNO_3 ; \qquad (5)$$

oxidiert und ausgewaschen werden.

**15.** Verfahren nach Anspruch (14), dadurch gekennzeichnet, daß zur Durchführung der Reaktion im Eintrittsbereich des Gases, die $H_2O_2$ - Aufgabe im Gegenstrom zu den nitrosen Gasen und mit stöchiometrischem Überschuß erfolgt.

**16.** Verfahren nach Anspruch (1 - 15), dadurch gekennzeichnet, daß die Stoffaustauschreaktionen in einer geordneten Packung oder in Kolonnenböden durchgeführt werden.

**17.** Verfahren nach Anspruch (1 - 16), dadurch gekennzeichnet, daß die Höhe der Einbauten so bemessen wird, in Stufe 2 in Fließrichtung des Gases zunächst die nitrosen Gase mittels $H_2O_2$ absorbiert werden und in dem verbleibenden Teil der Einbauten soviel Austauschfläche vorhanden ist, daß auch der am schwersten abscheidbare 2 weitere Schadstoff d.h. der Stoff mit der höchsten Abscheideleistung oxidativ behandelt werden kann.

**18.** Verfahren nach Anspruch (1 - 17), dadurch gekennzeichnet, daß die NOx-Konzentration im Reingas über die $NO_2$-Bildung in Stufe 1 geregelt wird.

**19.** Verfahren nach Anspruch (1 - 18), dadurch gekennzeichnet, daß die $NO_2$-Bildung in Stufe 1 über eine NOx-Messung im Gas aus der Stufe 1 durch einen Sollwert-Istwert - Vergleich geregelt wird.

**20.** Verfahren nach Anspruch (1 - 19), dadurch gekennzeichnet, daß zur Verbesserung der Abscheideleistung und zur Erzeugung einer Säure (HNO3) mit höherer Konzentration das zu behandelnde Gas vor der Stufe 1 oder Stufe 2 unter den Taupunkt gekühlt wird.

**21.** Verfahren nach Anspruch (1 - 20), dadurch gekennzeichnet, daß aus dem NOx-armen Reingas in einer Wäsche die verbliebene Salpetersäure (HNO3) ausgewaschen wird.

**22.** Verfahren nach Anspruch (1 - 21), dadurch gekennzeichnet, daß zur Reduzierung der nicht verwertbaren Abwässer, die Absorption von NO/NO2 der Stufe 2 in mehreren Stufen durchgeführt wird und die Waschflüssigkeit aus der jeweils nachgeschalteten Stufe in die vorgeschaltete als Waschflüssigkeit eingeleitet wird.

**23.** Verfahren nach Anspruch (1 - 22), dadurch gekennzeichnet, daß die Abgase aus Anlagen zur Produktion von HNO3 oder Beizbädern mit diesem Verfahren behandelt werden.

Fig. 1

EP 0 487 834 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y,D | WO-A-8 900 449 (CURTIUS) <br> * Insgesammt * | 1,5,6 | B01D53/34 |
| A | | 7-22 | |
| | --- | | |
| Y | FR-A-2 153 011 (SHOWA DENKO K.K.) <br> * Ansprüche 1,6; Abbildung 2 * | 1,6 | |
| | --- | | |
| Y | FR-A-2 324 579 (BOLIDEN AKTIEBOLAG) <br> * Ansprüche 1,6-8; Abbildung 1 * | 1,6 | |
| | --- | | |
| Y | EP-A-0 373 312 (KERNFORSCHUNGSZENTR. KARLSRUHE) <br> * Spalte 2, Zeile 17 - Zeile 21; Beispiel 4 * | 1,5 | |
| | --- | | |
| A | EP-A-0 145 517 (RHONE-POULENC CHIMIE DE BASE) <br> * Ansprüche 1-7 * | 1-23 | |
| | --- | | |
| A | US-A-4 562 052 (AIR PRODUCTS AND CHEMICALS) <br> * Ansprüche 1-12; Abbildung 1 * | 1-23 | |
| | --- | | |
| A | DE-A-3 329 823 (ERA GMBH) <br> * Seite 8, Zeile 3 - Zeile 25; Abbildung 1 * | 1 | |
| | | | **RECHERCHIERTE SACHGEBIETE (Int. Cl.5 )** |
| | ----- | | B01D |

Der vorliegende Recherchenbericht wurde für alle Patentansprüche erstellt

| Recherchenort | Abschlußdatum der Recherche | Prüfer |
|---|---|---|
| DEN HAAG | 20 MAERZ 1992 | A.F. EIJKENBOOM |